# EUROPÄISCHE PATENTSCHRIFT

(11) **EP 2 193 389 B1**
(45) Veröffentlichungstag und Bekanntmachung des Hinweises auf die Patenterteilung: **27.02.2013**
(21) Anmeldenummer: 08803176.0
(22) Anmeldetag: 25.08.2008
(51) Int. Cl.: G01S 13/93, G01S 13/10, G01S 13/32

(54) **RADAREINRICHTUNG**
RADAR DEVICE
DISPOSITIF RADAR

(30) Priorität: 20.09.2007 DE 102007045013
(43) Veröffentlichungstag der Anmeldung: 09.06.2010
(73) Patentinhaber: Robert Bosch GmbH, 70442 Stuttgart (DE)
(72) Erfinder: FOCKE, Thomas, 31180 Ahrbergen (DE); HASCH, Juergen, 70195 Stuttgart (DE); GAIER, Stefan, 70599 Stuttgart (DE); WEIKERT, Lars, 70180 Stuttgart (DE); HANSEN, Thomas, 31139 Hildesheim (DE)
(86) Internationale Anmeldenummer: PCT/EP2008/061056
(87) Internationale Veröffentlichungsnummer: WO 2009/040195

(56) Entgegenhaltungen:
- EP-A- 1 617 233
- WO-A-03/052449
- WO-A2-96/12322
- US-A- 5 517 197
- RIVENQ-MENHAJ A ET AL: "Combining two radar techniques to implement a collision avoidance system" MEASUREMENT SCIENCE AND TECHNOLOGY, IOP, BRISTOL, GB, Bd. 9, Nr. 8, 1. August 1998 (1998-08-01), Seiten 1343-1346, XP020064569 ISSN: 0957-0233

## Beschreibung

Die Erfindung betrifft eine Radareinrichtung, ein Verfahren zur radargestützten Erfassung einer Umgebung, ein Computerprogramm und ein Computerprogrammprodukt.

### Stand der Technik

Radarsysteme mit Antennen, deren Hauptkeulenrichtung in Abhängigkeit einer Frequenz über einen bestimmten Winkelbereich geschwenkt wird, werden üblicherweise als Frequenzscanner bezeichnet. Dabei arbeiten derartige Frequenzscanner bspw. mit FMCW (Frequency Modulated Contious Wave)-Modulationen zur Realisierung eines frequenzmodulierten Dauerstrichradars oder mit sog. Step-FMCW-Modulationen zur Bereitstellung eines gepulsten frequenzmodulierten Dauerstrichradars.

Aufgrund einer im automotiven Bereich angestrebten Update-Rate von weniger als 10 ms und Reichweiten von ca. 200 m können je nach verwendeter Art der Modulation nur schmale Frequenzbereich durchlaufen werden. Aufgrund derartiger schmaler Frequenzbereiche können mit den alternativ zu verwendenden Radarsystemen mehrere abzutastende Radarziele bezogen auf ihren Längsabstand üblicherweise nur im Bereich von wenigen Metern getrennt werden. Derartige Auflösungen sind für Anwendungen in großen Abständen (Long-Range) meistens ausreichend. Für Funktionen, die bei niedrigeren Update-Raten eine höhere Entfernungsauftösung erfordern, was insbesondere bei Anwendungen für nahe Entfernungen (Short-Range) erforderlich ist, kommen die zweitgenannten Radarsysteme mit Pulsmodulationen zum Einsatz, wobei hierbei Hauptkeulen bzw. Hauptkeutenrichtungen der Antennen nicht über die Frequenz geschwenkt werden.

Falls man nun eine Umgebung sowohl in naher als auch in weiter Entfernung radargestützt erfassen will, um somit sowohl Long-Range- als auch Short-Range-Anwendungen zu bedienen, ist es erforderlich, mehrere Antennen bzw. Sensoren zur Bereitstellung und/oder Erfassung von Radarstrahlen einzusetzen.

Eine Impuls-Radar-Einrichtung zum Erfassen eines Abstandsbereichs zwischen ca. 10 cm bis ca. 6 m mit einer analogen Auflösung in einer Größenordnung von ca. 0,25 mm ist aus der Druckschrift WO 96/19737 A1 bekannt. Diese Einrichtung umfasst mehrere Antennen, die nebeneinander parallel und ggf. auch beabstandet angeordnet sind. Alternativ können diese Antennen auch in einer nebeneinander versetzten Konfiguration angeordnet werden.

Weiterhin beschreibt die Druckschrift WO 96/12322 A2 eine Richtungs-Radar-Anordnung mit mehreren Antennen. Diese Anordnung kann mit frequenzmodulierten kontinuierlichen Wellen betrieben werden. Zur Bereitstellung einer Strahlenabtastung sind die Antennen nebeneinander angeordnet und bilden somit eine Wellenfront in Richtung einer abzutastenden Region.

In der Druckschrift EP 1 617 233 A2 ist beschrieben, dass eine Steuereinheit bewirkt, dass ein Radargerät in einer ersten Betriebsart als FM-CW-Radar fungiert, indem sie zum Ausgeben eines Hochfrequenzsendesignals auf einen FM-CW-Modulationsmodus umschaltet. Weiterhin bewirkt die Steuereinheit, dass das Radargerät in einer zweiten Betriebsart als Pulsradar fungiert.

Ein System zum Überwachen eines Bereichs hinter einem Kraftfahrzeug ist in der Druckschrift WO 03/052449 A2 beschrieben. Dabei umfasst dieses System einen Sensor mit einer transmittierenden Antenne, die dazu geeignet ist, ein RF-Signal mit einer quasi ausgerichteten Form in einem Nahbereich bereitzustellen. Außerdem umfasst das System einen Generator, der wahlweise ein frequenzmoduliertes, kontinuierliches Signal sowie ein pulsierendes Signal bereitstellt.

Eine modulare Radaranlage für ein Kraftfahrzeug ist in der Druckschrift US 517 197 A beschrieben. Diese Anlage umfasst eine Sendeantenne, der ein Schalter zugeordnet ist, sowie eine hiervon getrennte Empfangsantenne eines Empfangskanals, der zudem einen Schalter umfasst, der zwischen Strahlpositionen für den Empfang auswählen kann.

### Vorteile der Erfindung

Vor diesem Hintergrund werden eine Radareinrichtung und ein Verfahren mit den Merkmalen der unabhängigen Patentansprüche vorgestellt.

Die Radareinrichtung weist eine Antenne sowie ein Schaltungsmodul auf, wobei das Schaltungsmodul dazu ausgebildet ist, ein für die Antenne bereitzustellendes elektrisches Signal derart einzustellen, dass die Antenne je nach Schaltung entweder ein kontinuierliches moduliertes Radarsignal für einen Fernbereich oder ein gepulstes moduliertes Radarsignal für einen Nahbereich aussendet.

Somit ist die vorgestellte Radareinrichtung unter anderem dazu geeignet, eine Umgebung durch Einsatz elektromagnetischer Wellen zu erfassen und dabei abzutasten bzw. zu scannen. Durch Schalten des elektrischen Signals für die Antenne, wobei die Antenne aus dem elektrischen Signal elektromagnetische Wellen bereitstellt, kann die Radareinrichtung zum Erfassen eines Nahbereichs für Objekte, die sich in einem geringem Abstand befinden, sowie für einen Fernbereich, bei dem Objekte, die sich in einem großen Abstand befinden, betrieben werden. Bei dieser Radareinrichtung ist lediglich eine Antenne notwendig, die durch geeignete Modifikation des elektrischen Signals zum Erfassen des Nahbereichs sowie des Fernbereichs flexibel ausgebildet ist.

In Ausgestaltung ist die Antenne dazu ausgebildet, eine frequenzabhängige Abtastung durchzuführen. Zudem kann die Antenne einen ausgesendeten Hauptkeulenbereich des Radarsignals räumlich variieren. Weiterhin ist vorgesehen, dass die Antenne der Radareinrichtung den Hauptkeulenbereich in Abhängigkeit einer Frequenz über einen Winkelbereich schwenkt. Alternativ oder ergänzend kann die Antenne die Breite des Hauptkeulenbereichs verändern.

Üblicherweise wird das elektrische Signal durch die Quelle erzeugt. Bei Betrieb der Radareinrichtung wird das elektrische Signal über eine Zuleitung einem Schaltungsmodul zugeführt, das mindestens einen als Hochfrequenzschalter ausgebildeten Schalter aufweist. Durch geeignete Schaltung des Schaltungsmoduls wird nunmehr entweder ein kontinuierliches Signal für den Fernbereich oder ein gepulstes Signal für den Nahbereich bereitgestellt. Falls das Schaltungsmodul mehrere elektrische Signale bereitstellt, können diese über eine Mischereinheit bzw. einen Mischer gemischt und der Antenne zugeführt werden. In Abhängigkeit einer bereitaestellten Form des elektrischen Signals sendet die Antenne entweder ein kontinuierlich moduliertes Radarsignal oder ein gepulstes moduliertes Radarsignal aus.

Die Radareinrichtung kann an einem Fahrzeug, bspw. einem Kraftfahrzeug, angeordnet und zum Erfassen einer Umgebung des Fahrzeugs ausgebildet sein.

Bei dem erfindungsgemäßen Verfahren zum radargestützten Erfassen einer Umgebung wird einer Antenne ein elektrisches Signal bereitgestellt, wobei dieses Signal derart geschaltet wird, dass von der Antenne je nach Schaltung entweder ein kontinuierliches moduliertes Radarsignal für einen Fernbereich oder ein gepulstes moduliertes Radarsignal für einen Nahbereich ausgesendet wird.

In Ausgestaltung kann dieses Signal über ein Schaltungsmodul mit Hochfrequenzschaltern derart geschaltet werden.

In einer Ausführungsform wird hierbei ein frequenzmoduliertes Dauerstrich-Radarsignal verwendet, außerdem kann die Breite einer Hauptkeule, mit der das Radarsignal ausgesendet wird, verändert werden.

Die erfindungsgemäße Einrichtung oder zumindest eine Komponente der Einrichtung ist dazu ausgebildet, sämtliche Schritte des beschriebenen Verfahrens durchzuführen. Weiterhin können einzelne Funktionen der mindestens einen Komponente der Radareinrichtung auch als Schritte des erfindungsgemäßen Verfahrens realisiert werden.

Das erfindungsgemäße Computerprogramm mit Programmcodemitteln ist zur Durchführung aller Schritte eines vorgestellten Verfahrens ausgebildet, wenn das Computerprogramm auf einem Computer oder einer entsprechenden Recheneinheit, insbesondere in einer erfindungsgemäßen Radareinrichtung, ausgeführt wird.

Die Erfindung betrifft zudem ein Computerprogrammprodukt mit Programmcodemitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere in einer erfindungsgemäßen Radareinrichtung, ausgeführt wird.

In Ausgestaltung kann mit der Radareinrichtung je nach Schaltung ein Verfahren für eine Abtastung für einen Fernbereich in einem Betrieb mit einem kontinuierlichen modulierten Radarsignal oder für einen Nahbereich in einem Betrieb mit einem gepulsten modulierten Radarsignal durchgeführt werden.

Mit der vorliegenden Erfindung ist es u. a. möglich, bspw. eine Umgebung eines als Fahrzeug ausgebildeten Objekts sowohl im Nahbereich als auch im Fernbereich zu scannen und somit abzutasten und dabei situationsbedingte unterschiedliche Anforderungen an Reichweiten und Update-Raten zu erfüllen.

In Ausgestaltung der Erfindung ist es möglich, ein FMCW-Modulationsverfahren sowie ein Pulsmodulationsverfahren mit einer Antenne, deren Hauptkeulenrichtung über die Frequenz geschwenkt werden kann, in einem Radarsensor und somit der Antenne zu kombinieren. Durch geeignete, insbesondere entfernungsabhängige, Wahl des jeweiligen Modulationsverfahrens unter Berücksichtigung eines Abtast- bzw. Scanbereichs und/oder durch eine Umgebungssituation bedingt, können im Rahmen der Erfindung beide Modulationsverfahren bzw. -arten optimal genutzt werden. Hierzu wirkt in einer Ausgestaltung der Erfindung die frequenzgesteuerte Quelle mit mindestens einem Hochfrequenzschalter, insbesondere zwei Hauptschaltern des Schaltungsmoduls, zusammen, wobei das von der Quelle erzeugte elektrische Signal von diesem mindestens Hochfrequenzschalter geschaltet wird. Dabei werden die Quelle, das Schaltungsmodul und die frequenzscannende Antenne über eine Steuerungseinheit der Radareinrichtung miteinander kombiniert. Weiterhin ergibt sich die Möglichkeit, einen größeren Bereich der zu erfassenden Umgebung, insbesondere unter Berücksichtigung von weiteren Anwendungen, für die die Umgebung erfasst wird, flexibel mit lediglich einem Sensor abzudecken.

In weiteren Ausgestaltungen können der Nahbereich oder der Fernbereich situationsbedingt angepasst werden. Dabei können bei Bedarf weitere Modulationsarten bzw. -abwandlungen, wie eine PN-Modulation, bei dem mit einer Bitfolge statt mit einer Frequenzfolge moduliert wird, eine Mulitplex-FMCW-Modulation, bei der mehrere Kanäle für modulierte Frequenzen gleichzeitig betrieben werden, eine FSK (frequency shift keying) -Modulation bzw. eine Frequenzumtastung und dergleichen in einer angepassten, geeignet betriebenen Radareinrichtung zum Einsatz kommen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt in schematischer Darstellung eine erste Ausführungsform einer erfindungsgemäßen Radareinrichtung bei Durchführung einer ersten Betriebsart.
- Figur 2: zeigt in schematischer Darstellung die in Figur 1 vorgestellte Radareinrichtung bei Durchführung einer zweiten Betriebsart.
- Figur 3: zeigt in schematischer Darstellung ein erstes Beispiel für eine Konfiguration eines Sichtbereichs bei einer radargestützten Erfassung einer Umgebung.
- Figur 4: zeigt in schematischer Darstellung ein zweites Beispiel zur Konfiguration eines Sichtbereichs bei einer radargestützten Erfassung einer Umgebung.

### Ausführungsformen der Erfindung

Die Figuren werden zusammenhängend und übergreifend beschrieben, gleiche Bezugszeichen bezeichnen gleiche Komponenten.

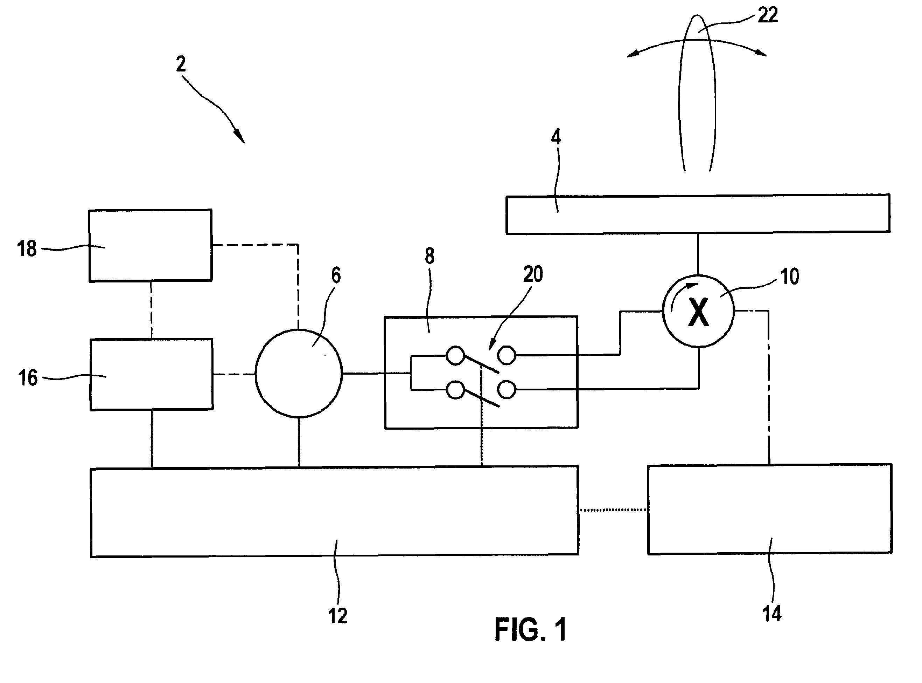

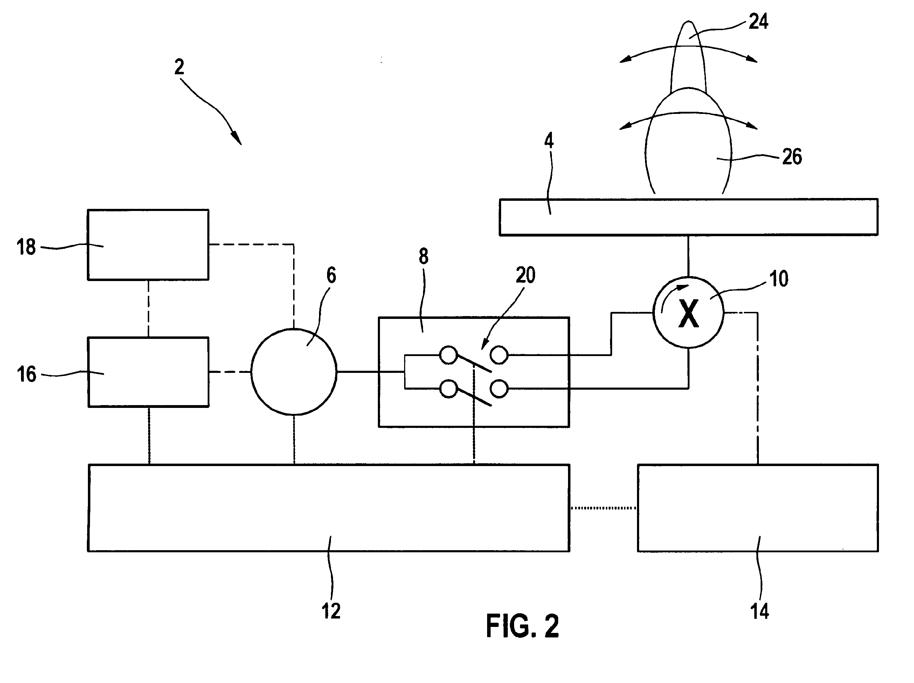

Die in den Figuren 1 und 2 in schematischer Darstellung gezeigte Ausführungsform einer Radareinrichtung 2 umfasst eine frequenzscannende Antenne 4, eine frequenzgesteuerte Quelle 6, ein Schaltungsmodul 8, das zwei Hochfrequenzschalter 20 aufweist, eine Mischereinheit 10, eine zentrale Steuerungseinheit 12, eine Signalverarbeitungseinheit 14, ein PLL-Modul 16 sowie eine Komponente und ein Modul 18, das eine DRO-Einheit sowie eine weitere Mischereinheit umfasst.

Hierbei ist jeweils vorgesehen, dass die Radareinrichtung 2 durch die zentrale Steuerungseinheit 12 gesteuert wird. Für ein Abtasten bzw. Scannen eines Fernbereichs (Long-Range-Bereich) werden in den vorliegenden Ausführungsformen FMCW-basierte Modulationsverfahren eingesetzt. Die hierzu erforderlichen elektrischen Signale werden von der Quelle 6 frequenzmoduliert bereitgestellt. Für den Fernbereich werden die Hochfrequenzschalter 20 des Schaltungsmoduls 8 auf Durchgang gestellt, so dass die unveränderten elektrischen Signale über die Mischereinheit 10 der Antenne 4 bereitgestellt werden. Zum Erfassen der Umgebung strahlt die Antenne 4 Radarsignale in Form einer schmalen Hauptkeule 22 für den Fernbereich aus. Dabei ist vorgesehen, dass die Hauptkeule 22, wie durch den gebogenen Doppelpfeil angedeutet, in Abhängigkeit einer Frequenz des Radarsignals über einen Winkelbereich hin und her geschwenkt wird.

Zum Betrieb im Nahbereich wird auf Figur 2 verwiesen. Bei einem derartigen Betrieb sind die Hochfrequenzschaiter 20 des Schaltungsmoduls 8 derart gestellt, dass das von der Quelle 6 bereitgestellte elektrische Signal gepulst wird, so dass aus diesem elektrischen Signal Pulse erzeugt werden. Diese Pulse werden ebenfalls über die Mischeinrichtung 10 der Antenne 4 bereitgestellt. Allerdings ist nun weiterhin vorgesehen, dass eine Breite der Hauptkeule variiert wird, so dass ein Verfahren zum Abtasten der Umgebung im Nahbereich mit einer breiten Hauptkeule 26 und im Fernbereich mit der schmalen Hauptkeule 24 durchgeführt wird. Zudem wird über eine sog. Step-FMCW die breite Hauptkeule 26 für eine kurze Zeit in eine Richtung festgehalten.

Zur Variation der Breite weist die Antenne 4 geeignete Abstrahlmittel auf. Durch Variation einer Breite der Hauptkeule werden u. a. die Update-Rate und die Reichweite situationsbedingt angepasst.

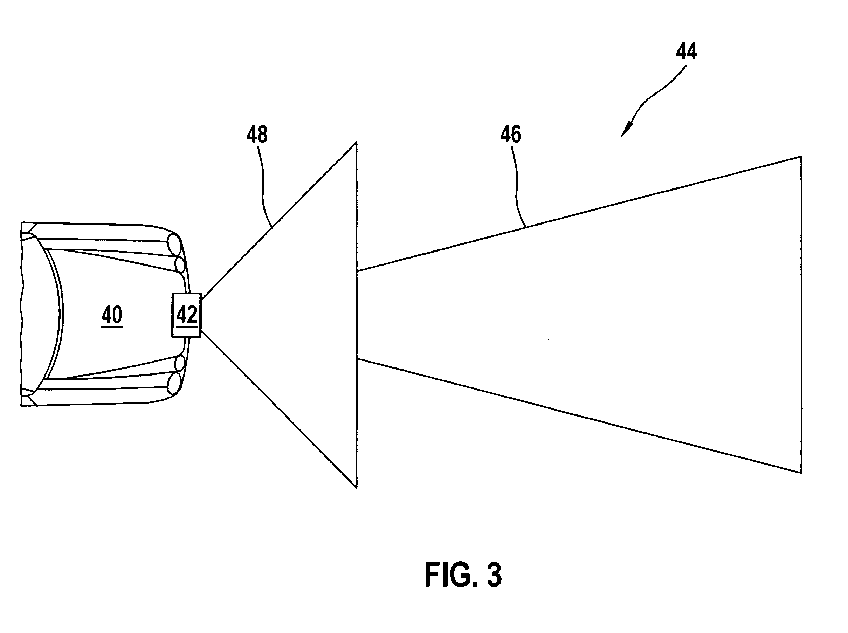

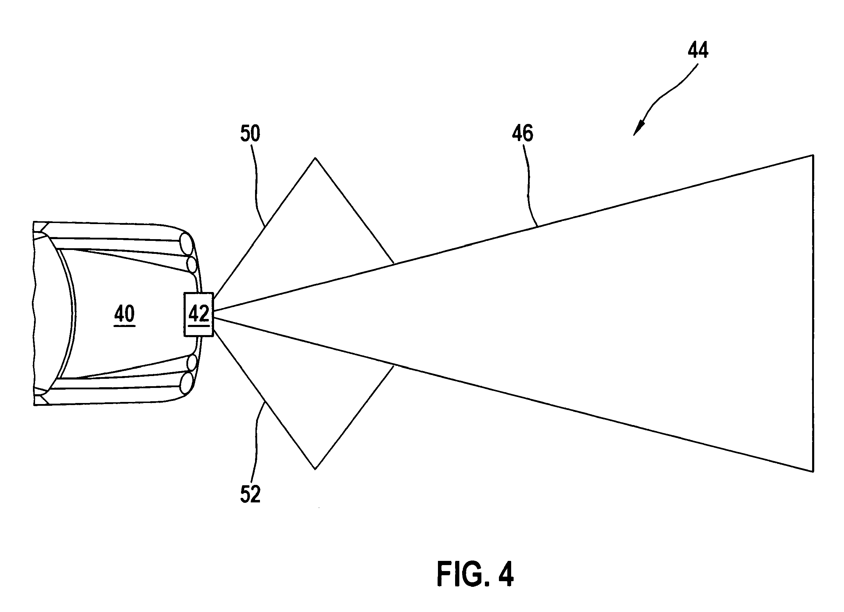

Die Figuren 3 und 4 zeigen jeweils einen Frontbereich eines Kraftfahrzeugs 40, an dem eine zweite Ausführungsform einer Radareinrichtung 42 angeordnet ist. Bei Betrieb der Radaranordnung 42 wird in Geradeausrichtung des Kraftfahrzeugs 40 ein Hauptkeulenbereich 44 in einem engen Winkelbereich 46 mit einem frequenzmodulierten Radarsignal betrieben.

Durch die flexible Möglichkeit, zwischen FMCW- und Pulsbetrieb umzuschalten, können mit der vorliegenden Radareinrichtung 42 zwei unterschiedliche Abdeckungsszenarien realisiert werden.

Bezüglich einer Ausgestaltung des Hauptkeulenbereichs 44 im Nahbereich, wobei ein gepulstes frequenzmoduliertes Radarsignal verwendet wird, zeigt Figur 3 in schematischer Darstellung eine Verbreiterung 48 des Hauptkeulenbereichs 44.

Eine alternative Ausgestaltung des Hauptkeulenbereichs 44 im Nahbereich ist in Figur 4 gezeigt. Hierbei werden speziell nur die Randbereiche 50, 52 im Nahbereich mit einem PulsModulationsverfahren abgedeckt.

## Patentansprüche

1. Radareinrichtung, die eine Antenne (4) sowie ein Schaltungsmodul (8) aufweist, wobei das Schaltungsmodul (8) mindestens einen Hochfrequenzschalter (20) aufweist und dazu ausgebildet ist, ein für die Antenne (4) bereitzustellendes elektrisches Signal derart einzustellen, dass die Antenne (4) je nach Schaltung des Schaltungsmoduls (8) entweder ein kontinuierliches moduliertes Radarsignal für einen Fernbereich oder ein gepulstes moduliertes Radarsignal für einen Nahbereich aussendet, wobei der mindestens eine Hochfrequenzschalter (20) für den Fernbereich auf Durchgang gestellt wird, und wobei der mindestens eine Hochfrequenzschalter (20) zum Betrieb im Nahbereich derart gestellt wird, dass das von einer Quelle (6) bereitgestellte Signal gepulst wird,
**dadurch gekennzeichnet,**
**dass** die Antenne (4) dazu ausgebildet ist, einen ausgesendeten Hauptkeulenbereich (44) des Radarsignals räumlich zu variieren, den Hauptkeulenbereich (44) in Abhängigkeit einer Frequenz über einen Winkelbereich zu schwenken, eine Breite des Hauptkeulenbereichs (44) mit Abstrahlmitteln der Antenne zu verändern, wobei eine breite Hauptkeule (26) im Nahbereich über eine Step-FMCW für eine kurze Zeit in einer Richtung festzuhalten ist.

2. Radareinrichtung nach Anspruch 1, bei der die Antenne (4) dazu ausgebildet ist, eine frequenzabhängige Abtastung durchzuführen.

3. Radareinrichtung nach Anspruch 1 oder 2, die eine Quelle (6) zur Bereitstellung des elektrischen Signals aufweist.

4. Radareinrichtung nach einem der voranstehenden Ansprüche, die an einem Fahrzeug (40) angeordnet und zum Erfassen einer Umgebung des Fahrzeugs (40) ausgebildet ist.

5. Verfahren zum radargestützten Erfassen einer Umgebung, bei dem einer Antenne (4) ein elektrisches Signal bereitgestellt wird, das derart geschaltet wird, dass von der Antenne (4) je nach Schaltung eines Schaltungsmoduls (8), das mindestens einen Hochfrequenzschalter (20) aufweist, entweder ein kontinuierliches moduliertes Radarsignal für einen Fernbereich oder ein gepulstes moduliertes Radarsignal für einen Nahbereich ausgesendet wird, wobei der mindestens eine Hochfrequenzschalter (20) für den Fernbereich auf Durchgang gestellt wird, und wobei der mindestens eine Hochfrequenzschalter (20) zum Betrieb im Nahbereich derart gestellt wird, dass das von einer Quelle (6) bereitgestellte Signal gepulst wird. **dadurch gekennzeichnet,**
**dass** ein ausgesendeter Hauptkeulenbereich (44) des Radarsignals von der Antenne (4) räumlich variiert und in Abhängigkeit einer Frequenz über einen Winkelbereich geschwenkt wird, und dass eine Breite des Hauptkeulenbereichs (44), mit der das Radarsignal ausgesendet wird, von Abstrahlmitteln der Antenne verändert wird, und dass eine breite Hauptkeule (26) im Nahbereich über eine Step-FMCW für eine kurze Zeit in einer Richtung festgehalten wird.

6. Verfahren nach Anspruch 5, bei dem ein frequenzmoduliertes Dauerstrich-Radarsignal verwendet wird.

7. Computerprogramm mit Programmcodemitteln, um alle Schritte eines Verfahrens nach einem der Ansprüche 5 oder 6 durchzuführen, wenn das Computerprogramm auf einem Computer oder einer entsprechenden Recheneinheit, insbesondere in einer Radareinrichtung (2, 42) nach einem der Ansprüche 1 bis 4, ausgeführt wird.

8. Computerprogrammprodukt mit Programmcodemitteln, die auf einem computerlesbaren Datenträger gespeichert sind, um alle Schritte eines Verfahrens nach einem der Ansprüche 5 oder 6 durchzuführen, wenn das Computerprogramm auf einem Computer oder einer entsprechenden Recheneinheit, insbesondere in einer Radareinrichtung nach einem der Ansprüche 1 bis 4, ausgeführt wird.

## Claims

1. Radar device, which has an antenna (4) and a switching module (8), wherein the switching module (8) has at least one high frequency switch (20) and is designed to set an electrical signal which is to be made available for the antenna (4), in such a way that the antenna (4) either emits a continuous modulated radar signal for a long range or a pulsed modulated radar signal for a close range depending on the switching of the switching module (8), wherein the at least one high frequency switch (20) is switched to on for the long range, and wherein the at least one high frequency switch (20) is set for operation in the close range in such a way that the signal made available by a source (6) is pulsed,
**characterized**
**in that** the antenna (4) is designed to spatially vary an emitted main lobe region (44) of the radar signal, to pivot the main lobe region (44) over an angular range as a function of a frequency, to change a width of the main lobe region (44) with irradiation means of the antenna, wherein a wide main lobe (26) has to be secured in one direction in the close range for a short time by means of a step FMCW.

2. Radar device according to Claim 1, in which the antenna (4) is designed to carry out frequency-dependent sampling.

3. Radar device according to Claim 1 or 2, which has a source (6) for making available the electrical signal.

4. Radar device according to one of the preceding claims, which is arranged on a vehicle (40) and is designed to sense surroundings of the vehicle (40).

5. Method for radar-assisted sensing of surroundings, in which an electrical signal is made available to an antenna (4), which electrical signal is switched in such a way that the antenna (4) emits either a continuous modulated radar signal for a long range or a pulsed modulated radar signal for a close range depending on the switching of a switching module (8) which has at least one high frequency switch (20), wherein the at least one high frequency switch (20) is switched to on for the long range, and wherein the at least one high frequency switch (20) is set for operation in the close range in such a way that the signal made available by a source (6) is pulsed, **characterized**
**in that** an emitted main lobe region (44) of the radar signal is varied spatially by the antenna (4) and is pivoted over an angular range as a function of a frequency, and in that a width of the main lobe region (44) with which the radar signal is emitted is changed by irradiation means of the antenna, and in that a wide main lobe (26) is secured in one direction in the close range for a short time by means of a step FMCW.

6. Method according to Claim 5, in which a frequency-modulated continuous wave radar signal is used.

7. Computer program having program code means for carrying out all the steps of a method according to one of Claims 5 and 6, when the computer program is run on a computer or a corresponding computer unit, in particular in a radar device (2, 42) according to one of Claims 1 to 4.

8. Computer program product having program code means which are stored on a computer-readable data carrier for carrying out all the steps of a method according to one of Claims 5 and 6, when the computer program is run on a computer or a corresponding computer unit, in particular in a radar device according to one of Claims 1 to 4.

## Revendications

1. Dispositif radar, lequel présente une antenne (4) ainsi qu'un module de commutation (8), le module de commutation (8) présentant au moins un commutateur à haute fréquence (20) et étant configuré pour régler un signal électrique à délivrer à l'antenne (4) de telle sorte que l'antenne (4), suivant la commutation du module de commutation (8), émet soit un signal radar à modulation continue pour une zone éloignée, soit un signal radar à modulation pulsée pour une zone proche, l'au moins un commutateur à haute fréquence (20) étant réglé en position passante pour la zone éloignée et l'au moins un commutateur à haute fréquence (20), pour un fonctionnement dans la zone proche, étant réglé de telle sorte que le signal délivré par une source (6) est pulsé,
**caractérisé en ce**
**que** l'antenne (4) est configurée pour faire varier dans l'espace une zone de lobe principal (44) émise du signal radar, pour pivoter la zone de lobe principal (44) en fonction d'une fréquence sur une plage angulaire, pour modifier une largeur de la zone de lobe principal (44) avec des moyens de rayonnement de l'antenne, un lobe principal (26) large devant être maintenu dans la zone proche dans une direction pendant une courte durée par le biais d'ondes entretenues modulées en fréquence à paliers.

2. Dispositif radar selon la revendication 1, dans lequel l'antenne (4) est configurée pour effectuer un balayage dépendant de la fréquence.

3. Dispositif radar selon la revendication 1 ou 2, lequel présente une source (6) pour délivrer le signal électrique.

4. Dispositif radar selon l'une des revendications précédentes, lequel est monté sur un véhicule (40) et est configuré pour détecter un environnement du véhicule (40).

5. Procédé de détection d'un environnement avec l'assistance d'un radar, selon lequel un signal électrique est délivré à une antenne (4), lequel est commuté de telle sorte que soit un signal radar à modulation continue pour une zone éloignée, soit un signal radar à modulation pulsée pour une zone proche, est émis par l'antenne (4), suivant la commutation d'un module de commutation (8), lequel présente au moins un commutateur à haute fréquence (20), l'au moins un commutateur à haute fréquence (20) étant réglé en position passante pour la zone éloignée et l'au moins un commutateur à haute fréquence (20), pour un fonctionnement dans la zone proche, étant réglé de telle sorte que le signal délivré par une source (6) est pulsé,
**caractérisé en ce**
**que** l'antenne (4) fait varier dans l'espace une zone de lobe principal (44) émise du signal radar, laquelle est pivotée en fonction d'une fréquence sur une plage angulaire, et en ce qu'une largeur de la zone de lobe principal (44), avec laquelle est émis le signal radar, es modifiée par des moyens de rayonnement de l'antenne, et en ce qu'un lobe principal (26) large est maintenu dans la zone proche dans une direction pendant une courte durée par le biais d'ondes entretenues modulées en fréquence à paliers.

6. Procédé selon la revendication 5, selon lequel un signal radar à trait continu modulé en fréquence est utilisé.

7. Programme informatique comprenant des moyens de code de programme pour exécuter toutes les étapes d'un procédé selon l'une des revendications 5 ou 6 lorsque le programme informatique est exécuté sur un ordinateur ou sur une unité de calcul correspondante, notamment dans un dispositif radar (2, 42) selon l'une des revendications 1 à 4.

8. Produit de programme informatique comprenant des moyens de code de programme qui sont enregistrés sur un support de données lisibles par ordinateur pour exécuter toutes les étapes d'un procédé selon l'une des revendications 5 ou 6 lorsque le programme informatique est exécuté sur un ordinateur ou sur une unité de calcul correspondante, notamment dans un dispositif radar selon l'une des revendications 1 à 4.
